# EUROPÄISCHE PATENTSCHRIFT

(11) **EP 4 037 933 B1**
(45) Veröffentlichungstag und Bekanntmachung des Hinweises auf die Patenterteilung: **13.09.2023**
(21) Anmeldenummer: 20781451.8
(22) Anmeldetag: 22.09.2020
(51) Int. Cl.: B60N 3/06

(54) **FUSSABSTÜTZVORRICHTUNG FÜR EINEN FUSSRAUM EINES FAHRZEUGS**
FOOT SUPPORT DEVICE FOR A FOOTWELL OF A VEHICLE
DISPOSITIF DE SUPPORT DE PIED POUR UN ESPACE POUR LES PIEDS D'UN VÉHICULE

(30) Priorität: 30.09.2019 DE 102019126236
(43) Veröffentlichungstag der Anmeldung: 10.08.2022
(73) Patentinhaber: Audi AG, 85045 Ingolstadt (DE); ZF Automotive Germany GmbH, 73553 Alfdorf (DE)
(72) Erfinder: JAKOBS, Bernd, 90453 Nürnberg (DE); FÜRST, Franz, 85114 Buxheim (DE); KRÖNES, Walter, 85080 Gaimersheim (DE); GRUNDHEBER, Christoph, 85080 Gaimersheim (DE)
(86) Internationale Anmeldenummer: PCT/EP2020/076381
(87) Internationale Veröffentlichungsnummer: WO 2021/063739

(56) Entgegenhaltungen:
- CN-A- 108 909 670
- GB-A- 2 510 697
- KR-A- 20050 009 105
- KR-A- 20070 023 067

## Beschreibung

Die Erfindung betrifft eine Fußabstützvorrichtung für einen Fußraum eines Fahrzeugs.

Fußabstützvorrichtungen für Fußräume von Fahrzeugen sind in zahlreichen Variationen bekannt. Die Fußabstützvorrichtungen können mehrere Abstützelemente aufweisen, wobei mindestens ein Abstützelement beim Erfassen einer vorgegebenen Fahrsituation von einer Ruheposition in eine Wirkposition überführbar ist. Hierbei ist das mindestens eine Abstützelement in der Ruheposition parallel zum Boden des Fußraums angeordnet. In der Wirkposition weist das mindestens eine Abstützelement gegenüber dem Boden einen Aufstellwinkel auf, wobei das mindestens eine Abstützelement in der Wirkposition mindestens einen Fuß eines Insassen abstützt.

Derzeit werden in Fahrzeugen Airbags und Gurte eingesetzt, um im Falle einer Kollision den Insassen in einer aufrechten Sitzposition ausreichend zu schützen. Um zukünftige Anforderungen an pilotierte Fahrfunktionen mit Komfortpositionen zu ermöglichen, werden neuartige Rückhaltesysteme entwickelt und ins Fahrzeug integriert. Bei heutigen Komfortpositionen, bei welchen in der Regel eine Rückenlehne in horizontale Richtung und/oder eine Sitzlängsverstellung nach hinten verstellt wird, kann es unter Umständen bei einem Aufprall zum "Hochpendeln" der Unterschenkel, oder zum "Durchtauchen" des Insassen unter einem Sicherheitsgurt kommen. Weiterhin kann es insbesondere bei einer Sitzlängsverstellung nach hinten dazu kommen, dass die Füße relativ weit von der Spritzwand oder der Pedalerie weg sind. Im Falle eines Crashs kann somit unter Umständen kein Gegenlager bei den Füßen gebildet und somit eine "klassische" Insassenkinematik erzeugt werden, bei welcher die Füße nach vorne durchgestreckt werden. Dies kann zum Durchstecken der Knie führen. Weiterhin können durch Pedale unvorhergesehene bzw. inhomogene Anprallkörper entstehen.

Aus der DE 10 2017 007 579 A1 ist ein Fahrzeug mit zumindest einer in einem Fußraum wirkenden Fußabstützvorrichtung bekannt, welche mehrere hintereinander angeordnete Abstützelemente umfasst, welche bei einer erkannten vorgegebenen Fahrsituation, wie beispielsweise einer Kollision während eines autonomen Fahrbetriebs, jeweils von einer Ruheposition in eine Wirkposition überführbar sind. Die Abstützelemente sind in der Ruheposition parallel zum Boden des Fußraums angeordnet und weisen in der Wirkposition gegenüber dem Boden einen Aufstellwinkel auf und stützen mindestens einen Fuß eines Insassen ab.

Aus der DE 10 2015 213 789 A1 ist eine Sicherheitsfußablage mit einer Trittplatte bekannt, welche mit ihrem oberen Bereich mittels einer oberen Gelenkvorrichtung an einer Kraftfahrzeugstirnwand befestigbar ist, und im Normalbetrieb gegenüber einer zu einer Fahrbahnebene parallelen virtuellen Ebene einen Fußablagewinkel aufweist. Zudem weist die Trittplatte eine untere Gelenkvorrichtung zwischen einem unteren Bereich der Trittplatte und dem Kraftfahrzeugboden auf und ist derart anbringbar, dass der Fußablagewinkel außerhalb des Normalbetriebes dem Fußablagewinkel im Normalbetrieb entspricht.

Aus der KR 200 0009105 A ist eine Fußstütze eines Fahrzeugs nach dem Oberbegriff von Anspruch 1 bekannt, welche verhindern soll, dass der Knöchel eines Fahrers verdreht wird, indem der Winkel der Fußstütze bei einem Frontalzusammenstoß allmählich verändert wird. Diese Fußstütze eines Fahrzeugs umfasst eine Stützeinheit, welche aus einer Instrumententafel besteht, welche mit einer Karosserie oder einem Boden verbunden und an der Fahrzeugkarosserie befestigt ist, eine Fußstützenplatte, die im unteren Teil eines Fahrersitzes parallel zur Instrumententafel in einem Fahrzeugraum angeordnet ist, um den Fuß eines Fahrers darauf zu platzieren, eine Gleiteinheit, welche die Fußstützenplatte entlang der Stützeinheit nach oben und unten bewegt, um den oberen Teil der Fußstützenplatte mit der Instrumententafel zu verbinden, und eine Nockeneinheit, welche zwischen dem unteren Teil der Fußstützenplatte und der Instrumententafel verbunden ist und um die Fußstützenplatte oder den Boden gedreht werden kann, um den Winkel der Fußstützenplatte bei einem Aufprall zu verändern.

Der Erfindung liegt die Aufgabe zu Grunde, eine Fußabstützvorrichtung für einen Fußraum eines Fahrzeugs bereitzustellen, welche das Verletzungsrisiko eines Insassen reduziert.

Diese Aufgabe wird durch eine Fußabstützvorrichtung für einen Fußraum eines Fahrzeugs mit den Merkmalen des Patentanspruchs 1 gelöst. Vorteilhafte Ausgestaltungen mit zweckmäßigen Weiterbildungen der Erfindung sind in den abhängigen Patentansprüchen angegeben.

Um eine Fußabstützvorrichtung für einen Fußraum eines Fahrzeugs bereitzustellen, welche das Verletzungsrisiko eines Insassen reduziert, sind mehrere Abstützelemente hintereinander angeordnet und drehbeweglich miteinander verbunden, wobei eine Antriebsanordnung zumindest ein vorderstes Abstützelement in seine Wirkposition anhebt, und wobei eine Bewegung eines angehobenen vorderen Abstützelements eine Bewegung eines nachfolgenden Abstützelements bewirkt.

Damit können verschiedene Insassen mit unterschiedlichen Körpergrößen, Beinlängen usw. in unterschiedlichen Sitz- und Komfortpositionen durch die aktive Fußabstützvorrichtung geschützt werden.

Unter einer vorgegebenen Fahrsituation kann im Folgenden eine Situation verstanden werden, in welcher der Insasse seinen Fahrzeugsitz in eine Komfortstellung überführt hat und eine bevorstehende oder akute Unfallsituation oder eine starke Beschleunigung erfasst wird. In der Komfortstellung können die Füße des Insassen einen Abstand zu einem vorderen Bereich des Fußraum aufweisen, in welchem die Füße sonst bei einer Normalposition des Fahrzeugsitzes angeordnet sind. Zudem kann der Fahrzeugsitz einen anderen Neigungswinkel aufweisen als in einer aufrechten Normalposition des Fahrzeugsitzes. Zudem wird in der vorgegeben Fahrsituation von mindestens einer Sensoreinheit die bevorstehende oder akute Unfallsituation oder starke Beschleunigung erfasst. Die aktive Fußabstützvorrichtung kommt somit nur im Falle einer erkannten Unfallsituation zum Einsatz und unterstützt die Insassenkinematik einer Komfortposition angelehnt an die einer aufrechten normalen Sitzposition. Hierbei repräsentieren die Abstützelemente der aktiven Fußabstützvorrichtung eine Parallelverschiebung der Fußabstützung, welche in der normalen Sitzposition von Pedalen oder einer Stirnwand im Fußraum bewirkt wird. Weiterhin bildet die aktive Fußabstützvorrichtung in der Komfortposition des Fahrzeugsitzes eine homogene Anlaufstelle zu den Pedalen aus, und verhindert damit eine ungünstige Interaktion mit den Pedalen, wie beispielsweise ein schräges Auftreffen der Füße zwischen den Pedalen.

Unter einer Fußabstützvorrichtung für den Fußraum des Fahrzeugs wird im Folgenden eine Baugruppe mit mehreren Abstützelementen verstanden. Hierbei ist mindestens ein Abstützelement beim Erfassen der vorgegebenen Fahrsituation von einer Ruheposition in eine Wirkposition überführbar. Das mindestens eine Abstützelement ist in der Ruheposition parallel zum Boden des Fußraums angeordnet und weist in der Wirkposition gegenüber dem Boden einen Aufstellwinkel auf, wobei das mindestens eine Abstützelement in der Wirkposition mindestens einen Fuß des Insassen abstützt. Hierbei weist die Antriebsanordnung einen Antrieb und mindestens einen Aktor auf, welcher zumindest mit dem vordersten Abstützelement verbunden und durch den Antrieb antreibbar ist. Durch das Anheben des vordersten Abstützelements, kann das Abstützelement in die Wirkposition überführt werden. Das Drehgelenk zwischen dem vordersten Abstützelement und dem nachfolgenden Abstützelement kann den Aufstellwinkel zwischen dem Fahrzeugboden und dem ersten Abstützelement vorgeben. Zudem kann die Bewegung des vordersten Abstützelement auf die nachfolgenden Abstützelemente übertragen werden. Hierbei kann das vorderste Abstützelement weiterbewegt werden, um das nachfolgende Abstützelement in seine Wirkposition zu bewegen.

Da die Abstützelemente hintereinander angeordnet und drehbeweglich miteinander verbunden sind und eine Bewegung eines angehobenen vorderen Abstützelements eine Bewegung eines nachfolgenden Abstützelements bewirkt, kann in vorteilhafter Weise lediglich das vorderste Abstützelement angetrieben werden, um die Abstützelemente in ihre Wirkposition zu überführen. Dadurch kann das Gewicht der erfindungsgemäßen Fußabstützvorrichtung in vorteilhafter Weise reduziert werden. Zudem kann die erfindungsgemäße Fußabstützvorrichtung mehrere und dafür schmalere Abstützvorrichtungen aufweisen, ohne dass eine komplizierte Aufstellvorrichtung verwendet wird, um die Abstützelemente in die Wirkposition zu überführen. Durch mehrere schmale Abstützelemente wird in vorteilhafter Weise die Wahrscheinlichkeit erhöht, dass in der vorgegebenen Fahrsituation ein Abstützelement mit geringem Abstand zu dem mindestens einen Fuß bzw. zur Ferse des Fußes die Wirkposition aufweist. Dadurch legt der mindestens eine Fuß, bzw. dessen Ferse in der vorgegebenen Fahrsituation nur eine kurze Strecke zurück, bis die Ferse durch das Abstützelement gestützt wird. Durch den geringen Spielraum des mindestens einen Fußes bildet das korrespondierende Abstützelement in einer Komfortposition des Fahrzeugsitzes ein Gegenlager bei den Füßen aus, sodass bei einem Aufprall die Füße und die Knie des Insassen nicht nach vorne durchgestreckt werden können. Zudem kann ein vor dem mindestens einen Fuß, bzw. dessen Ferse angeordnetes Abstützelement den mindestens einen Fuß beim Übergang in die Wirkposition in vorteilhafter Weise nicht anheben und keine zusätzliche Bewegungsenergie auf den mindestens einen Fuß übertragen. Dadurch kann in vorteilhafter Weise verhindert oder erschwert werden, dass sich der mindestens eine Fuß und ein korrespondierendes Bein des Insassen in Fahrzeughochrichtung bewegen. Das bedeutet, dass ein "Hochpendeln" der Unterschenkel und ein "Durchtauchen" des Insassen unter einem Sicherheitsgurt in vorteilhafter Weise verhindert oder zumindest erschwert werden können. Dadurch kann das Verletzungsrisiko des Insassen in vorteilhafter Weise weiter reduziert werden.

In vorteilhafter Ausgestaltung der erfindungsgemäßen Fußabstützvorrichtung können benachbarte Abstützelemente jeweils über ein Drehgelenk miteinander verbunden werden. Hierbei kann ein hinterer Endbereich eines vorderen Abstützelements über das korrespondierende Drehgelenk mit einem vorderen Endbereich eines dahinterliegenden Abstützelements verbunden werden. Die Drehgelenke ermöglichen in vorteilhafter Weise eine einfache Übertragung von Bewegungsenergie von dem vorderen Abstützelement auf das nachfolgende Übertragungselement. Zudem kann ein Winkel zwischen dem vorderen Abstützelement und dem nachfolgenden Abstützelement durch das korrespondierende Drehgelenk vorgegeben werden. Dadurch gibt das Drehgelenk auch den Aufstellwinkel des vorderen Abstützelements vor, wenn dieses seine Wirkposition und das nachfolgende Abstützelement die Ruheposition aufweist.

In weiterer vorteilhafter Ausgestaltung der erfindungsgemäßen Fußabstützvorrichtung kann eines der Abstützelemente, welches in der vorgegebenen Fahrsituation direkt vor der Ferse des mindestens einen Fußes angeordnet ist, in der Wirkposition einen Fersenauflaufpunkt ausbilden. Hierbei kann eine dem Insassen zugewandte Oberfläche der Abstützelemente derart bemessen werden, dass die Fersen des Insassen abgestützt werden. Zwischen den Pedalen auf der Fahrerseite und dem mindestens einen Fuß wird durch das Abstützelement eine homogene Anlagefläche erzeugt, durch welche Knöchelverletzungen reduziert werden können. Zudem kann im vorderen Fußraum der Beifahrerseite oder im hinteren Fußraum vor den Rücksitzen eine solche Anlagefläche erzeugt werden, um auch dort einen Fersenauflaufpunkt zu erzeugen und ein Durchtauchen des korrespondierenden Insassen unter dem Bauchgurt zu verhindern.

In weiterer vorteilhafter Ausgestaltung der erfindungsgemäßen Fußabstützvorrichtung kann eine auf ein korrespondierendes Abstützelement wirkende Gewichtskraft der Ferse gegen eine vom Antrieb erzeugte Antriebskraft wirken. Durch die Gewichtskraft der Ferse und eine daraus resultierende erhöhte Stromaufnahme des Antriebs, welche von einem Sensorelement detektiert werden kann, kann ein Anliegen des korrespondierenden Abstützelements an der Ferse des Insassen und damit in vorteilhafter Weise eine Position der Ferse bzw. des Fußes am Fahrzeugboden ermittelt werden. Hierbei kann der Antrieb nach Erkennung der Gewichtskraft bzw. der erhöhten Stromaufnahme deaktiviert werden. Zudem kann in vorteilhafter Weise mit einfachen Mitteln das Abstützelement in die Wirkposition überführt werden, welches der Ferse am nächsten ist. Hierbei werden die Abstützelemente durch den Antrieb nacheinander aufgestellt bis das Abstützelement erreicht ist, auf welchem die Ferse aufliegt. Da der Antrieb bei einer erkannten erhöhten Stromaufnahme deaktiviert wird, kann ein Anheben der Ferse durch das Abstützelement verhindert werden, auf welchem die Ferse aufliegt. Das Sensorelement kann in vorteilhafter Weise bereits als Teil einer Motorsicherung des Antriebs vorhanden sein, so dass keine zusätzlichen Sensorelemente oder Auswerte- und Steuereinheiten verwendet werden, um die Position der Ferse zu ermitteln oder das Abstützelement zu bestimmen, welches der Ferse am nächsten ist.

In weiterer vorteilhafter Ausgestaltung der erfindungsgemäßen Fußabstützvorrichtung kann der mindestens eine Aktor das mindestens eine korrespondierende Abstützelement in seiner Wirkposition festlegen. Dadurch können die korrespondierenden Abstützelemente, und insbesondere das direkt vor der Ferse angeordnete Abstützelement, in vorteilhafter Weise in ihrer aktuellen Position festgelegt werden.

In weiterer vorteilhafter Ausgestaltung der erfindungsgemäßen Fußabstützvorrichtung kann mindestens ein Dämpfungselement in der vorgegebenen Fahrsituation Kräfte dämpfen, welche von der Ferse auf den Fersenauflaufpunkt übertragen werden. Durch das Dämpfungselement kann eine Verletzungsgefahr für den Fuß oder das Bein des Insassen weiter reduziert werden. Zudem kann eine beliebige progressive, degressive oder lineare Kennung der Dämpfung umgesetzt werden.

In weiterer vorteilhafter Ausgestaltung der erfindungsgemäßen Fußabstützvorrichtung können die Abstützelemente jeweils mindestens ein Dämpfungselement aufweisen. Hierbei kann das mindestens eine Dämpfungselement den Fersenauflaufpunkt des korrespondierenden Abstützelements ausbilden. Alternativ kann das Dämpfungselement zwischen dem Fersenauflaufpunkt und einer Stützanordnung des Abstützelements angeordnet werden.

In weiterer vorteilhafter Ausgestaltung der erfindungsgemäßen Fußabstützvorrichtung kann das mindestens eine Dämpfungselement zwischen dem mindestens einen Aktor und dem korrespondierenden Abstützelement angeordnet werden.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Ein Ausführungsbeispiel der Erfindung ist in der Zeichnung dargestellt und wird in der nachfolgenden Beschreibung näher erläutert. In der Zeichnung bezeichnen gleiche Bezugszeichen Komponenten bzw. Elemente, die gleiche bzw. analoge Funktionen ausführen. Hierbei zeigen:
- Fig. 1: eine schematische Seitenansicht eines Ausführungsbeispiels einer erfindungsgemäßen Fußabstützvorrichtung für einen Fußraum eines Fahrzeugs in einer Ruhestellung;
- Fig. 2: eine schematische Seitenansicht der Fußabstützvorrichtung aus Fig. 1 in einer ersten Betriebsstellung; und
- Fig. 3: eine schematische Seitenansicht der Fußabstützvorrichtung aus Fig. 1 und 2 in einer zweiten Betriebsstellung.

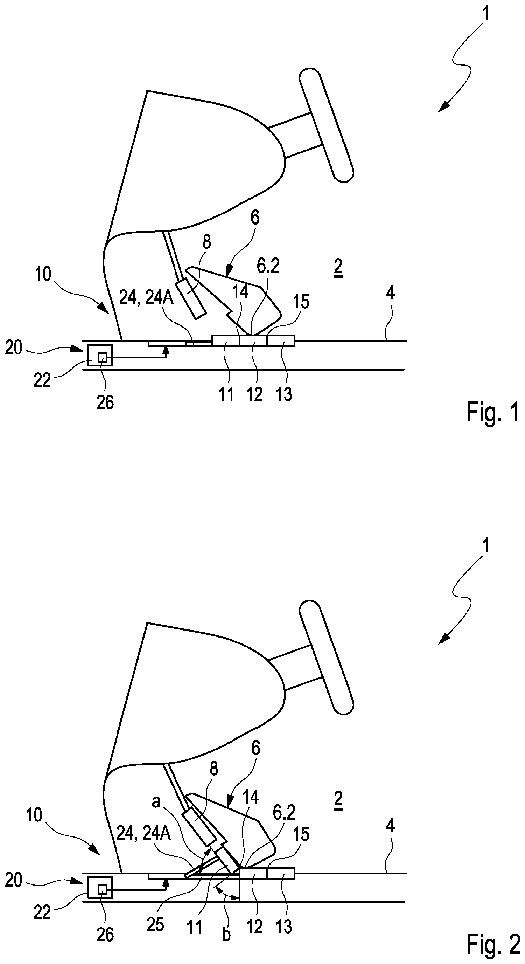

Wie aus Fig. 1 bis 3 ersichtlich ist, weist eine Fußabstützvorrichtung 10, für einen Fußraum 2 eines Fahrzeugs 1 mehrere Abstützelemente 11, 12, 13 auf, wobei mindestens ein Abstützelement 11, 12, 13 beim Erfassen einer vorgegebenen Fahrsituation von einer Ruheposition in eine Wirkposition überführbar ist. Hierbei ist das mindestens eine Abstützelement 11, 12, 13 in der Ruheposition parallel zum Boden 4 des Fußraums 2 angeordnet und weist in der Wirkposition gegenüber dem Boden 4 einen Aufstellwinkel a auf. Das mindestens eine Abstützelement 11, 12, 13 stützt in der Wirkposition mindestens einen Fuß 6 eines Insassen ab.

Hierbei sind die Abstützelemente 11, 12, 13 hintereinander angeordnet und drehbeweglich miteinander verbunden, wobei eine Bewegung eines angehobenen vorderen Abstützelements 11, 12 eine Bewegung eines nachfolgenden Abstützelements 12, 13 bewirkt.

Wie aus Fig. 1 bis 3 weiter ersichtlich ist, ist die erfindungsgemäße Fußabstützvorrichtung 10 im dargestellten Ausführungsbeispiel des Fahrzeugs 1 auf einer Fahrerseite angeordnet. Die erfindungsgemäße Fußabstützvorrichtung 10 kann zusätzlich oder alternativ auch an einer Beifahrerseite oder in einem hinteren Fußraum vor einer Rückbank bzw. im hinteren Fußraum vor einem Rücksitzes angeordnet werden.

Wie aus Fig. 1 bis 3 weiter ersichtlich ist, weist die erfindungsgemäße Fußabstützvorrichtung 10 im dargestellten Ausführungsbeispiel drei Abstützelemente 11, 12, 13 auf, welche auf der Fahrerseite an einem Boden 4 des Fußraums 2 zwischen Pedalen 8 und einem nicht dargestellten Sitz angeordnet sind. Ein erstes vorderstes Abstützelement 11 ist in Fahrtrichtung vorne angeordnet. Ein drittes hinterstes Abstützelement 13 ist in Fahrtrichtung hinten und benachbart zum Sitz angeordnet. Ein zweites Abstützelement 12 ist zwischen dem ersten Abstützelement 11 und dem dritten Abstützelement 13 angeordnet. In einem alternativen nicht dargestellten Ausführungsbeispiel der erfindungsgemäßen Fußabstützvorrichtung 10 können lediglich zwei Abstützelemente 11, 12, 13 oder mehr als drei Abstützelemente 11, 12, 13 im Fußraum 2 angeordnet werden.

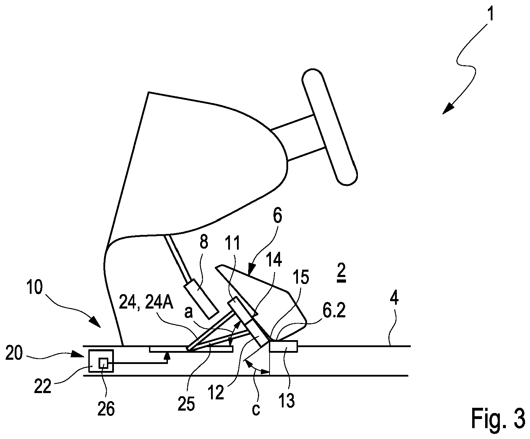

Wie aus Fig. 1 bis 3 weiter ersichtlich ist, sind benachbarte Abstützelemente 11, 12, 13 jeweils über ein Drehgelenk 14, 15 miteinander verbunden. Hierbei ist ein hinterer Endbereich eines vorderen Abstützelements 11, 12 über das Drehgelenk 14, 15 mit einem vorderen Endbereich eines nachfolgenden Abstützelements 12, 13 verbunden. Eine Antriebsanordnung 20 hebt zumindest das vorderste erste Abstützelement 11 an. Hierbei weist die Antriebsanordnung 20 einen Antrieb 22 und mindestens einen Aktor 24 auf, welcher mit dem vordersten ersten Abstützelement 11 verbunden und durch den Antrieb 22 antreibbar ist. Im dargestellten Ausführungsbeispiel der Antriebsanordnung 20 ist der Aktor 24 als Hebel 24A ausgeführt. Ein dem Boden 4 zugewandter Endbereich des Hebels 24A ist schwenkbar gelagert und ein dem ersten Abstützelement 11 zugewandter zweiter Endbereich des Hebels 24A ist mit einem dem Hebel 24A zugewandten vorderen Endbereich des ersten Abstützelements 11 drehbeweglich verbunden. Zwischen dem ersten Abstützelement 11 und dem Hebel 24A ist ein Kugelgelenk angeordnet. Durch das Schwenken des Hebels 24A wird der vordere Endbereich des ersten Abstützelements 11 angehoben. Hierbei vergrößert sich der Aufstellwinkel a zwischen dem ersten Abstützelement 11 und dem Boden 4. Da das erste Abstützelement 11 über das Drehgelenk 14 drehbeweglich mit dem zweiten Abstützelement 12 verbunden ist, vergrößert sich auch der Winkel b zwischen dem ersten Abstützelement 11 und dem zweiten Abstützelement 12. Das zweite Abstützelement 12 und das dritte Abstützelement 13 weisen die Ruheposition auf, bis das erste Abstützelement 11 seine in Fig. 2 dargestellte Wirkposition aufweist. Wird der Hebel 24A weiter vom Antrieb 22 angetrieben, hebt der Hebel 24A den hinteren Endbereich des ersten Abstützelements 11 vom Boden 4 ab. Der mit dem hinteren Endbereich des ersten Abstützelements 11 verbundene vordere Endbereich des zweiten Abstützelements 12 wird hierbei ebenfalls vom Boden 4 abgehoben. Hierbei wird der Winkel b zwischen dem ersten Abstützelement 11 und dem zweiten Abstützelement 12 verringert. Zudem wird durch das Anheben des vorderen Endbereichs des zweiten Abstützelements 12 der Aufstellwinkel a zwischen dem zweiten Abstützelement 12 und dem Boden 4 sowie der Winkel c zwischen dem zweiten Abstützelement 12 und dem dritten Abstützelement 13 vergrößert. Das dritte Abstützelement 13 weist die Ruheposition auf, bis das zweite Abstützelement 12 seine in Fig. 3 dargestellte Wirkposition aufweist. Das erste Abstützelement 11 und das zweite Abstützelement 12 sind hierbei im dargestellten Ausführungsbeispiel parallel zu einander angeordnet. Wird der Hebel 24A weiter angetrieben hebt sich der hintere Endbereich des zweiten Abstützelements 12 und der vordere Endbereich des dritten Abstützelements 13 vom Boden 4 ab. Dieser Vorgang kann fortgeführt werden, bis das hinterste Abstützelement 13 seine Wirkposition aufweist. Der hintere Endbereich des hintersten Abstützelements 13 kann drehbar am Boden 4 befestigt werden.

Wie aus Fig. 2 und 3 weiter ersichtlich ist, wirkt eine Gewichtskraft der Ferse 6.2 gegen die Antriebskraft des Antriebs 22, wenn der Antrieb 22 versucht das Abstützelement 12, 13 anzuheben, auf welchem die Ferse 6.2 aufliegt. Üblicherweise sind die Füße 6 und dadurch die Fersen 6.2 des Insassen parallel zu einander ausgerichtet, sodass beide Fersen 6.2 auf demselben Abstützelement 12, 13 aufliegen. Die Fersen 6.2 können aber auch versetzt zu einander ausgerichtet sein, so dass die Fersen 6.2 auf verschiedenen Abstützelementen 12, 13 aufliegen.

In Fig. 2 liegt die Ferse 6.2 auf dem zweiten Abstützelement 12 auf. In Fig. 3 liegt die Ferse 6.2 auf dem dritten Abstützelement 13 auf. Die Position der Ferse 6.2 ist abhängig von der Position des Sitzes, auf welchem der korrespondierende Insasse sitzt. Zudem ist die Position der Ferse 6.2 abhängig von der Länge der Beine und der Sitzposition des Insassen. Je nach Position der Ferse 6.2 weist die erfindungsgemäße Fußabstützvorrichtung 10 eine in Fig. 2 dargestellte erste Betriebsstellung, in welcher das erste Abstützelement 11 seine Wirkposition aufweist und das zweite und dritte Abstützelement 12, 13 jeweils ihre Ruheposition aufweisen. In einer in Fig. 3 dargestellten zweiten Betriebsstellung weisen das das erste und zweite Abstützelement 11, 12 jeweils ihre Wirkposition auf und das dritte Abstützelement 13 weist seine Ruheposition auf. Die Anzahl der möglichen Betriebsstellungen der erfindungsgemäße Fußabstützvorrichtung 10 ist abhängig von der Anzahl der Abstützelemente 11, 12, 13.

Wie aus Fig. 2 und 3 weiter ersichtlich ist, erfasst und wertet ein Sensorelement 26 im dargestellten Ausführungsbeispiel eine Stromaufnahme des Antriebs 22 aus, um eine Gewichtskraft und damit ein Anliegen einer Ferse 6.2 an einem Abstützelement 12, 13 zu erkennen. Wenn die beiden Fersen 6.2 des Insassen versetzt zueinander angeordnet sind, detektiert das Sensorelement 26 die wirkenden Gewichtskraft auf dem Abstützelement 12, auf welchem die vordere Ferse 6.2 des Insassen aufliegt. Der Antrieb 22 wird deaktiviert sobald die wirksame Gewichtskraft einer Ferse 6.2 auf einem Abstützelement 12, 13 detektiert wird. Dies ist auch der Fall, wenn das hinterste mit dem Boden 4 verbundene Abstützelement 13 die Wirkposition aufweist. Hierbei liegt die Ferse 6.2 auf keinem Abstützelement 11, 12, 13 auf. Dadurch weist immer das Abstützelement 11, 12, 13, welches am nächsten zur Ferse 6.2 liegt, seine Wirkposition auf und kann die Ferse 6.2 bei Bedarf abstützen. Die zusätzliche Bewegungskraft oder Bewegungsenergie, welche über das Abstützelement 12, 13, auf welchem die Ferse 6.2 aufliegt, auf die Ferse 6.2 übertragen wird, ist hierbei gering, da ein Anheben des korrespondierenden Abstützelements 12, 13, auf welchem die Ferse 6.2 aufliegt, und damit ein Anheben der Ferse 6.2 und des korrespondierenden Fußes 6 unterbunden wird.

Anstelle des Hebels 24A sind weitere geeignete Aktoren 24 vorstellbar, um die Abstützelemente 11, 12, 13 nacheinander anzuheben. Beispielsweise könnte ein Element mit einem Teleskopauszug oder ein Seilzug oder eine andere geeignete Anordnung von dem Antrieb 22 angetrieben werden, um die Abstützelemente 11, 12, 13 anzuheben.

Wie aus Fig. 2 und 3 weiter ersichtlich ist, bildet das Abstützelement 11, 12, welches vor der Ferse 6.2 des Fußes 6 angeordnet ist, in der Wirkposition einen Fersenauflaufpunkt aus. Hierbei legt der Aktor 24 zumindest die Abstützelemente 11, 12 in ihrer Wirkposition fest, welche vor der Ferse 6.2 angeordnet sind. Der Aktor 24 kann beispielsweise durch eine Rastvorrichtung in seiner Position verrasten. Dadurch stützt der Aktor 24 die Abstützelemente 11, 12, 13 ab und unterbindet in einer Situation mit wirkenden Beschleunigungskräften oder Beschleunigungsenergien eine ungewollte Überführung der Abstützelemente 11, 12, 13 in die Ruheposition. Dadurch stützt das jeweilige Abstützelement 11, 12 in der Wirkposition die Ferse 6.2 zuverlässig ab, auf welche die Beschleunigungskräfte oder Beschleunigungsenergien wirken. Im dargestellten Ausführungsbeispiel der Antriebsanordnung 20 umfasst die Antriebsanordnung 20 einen zusätzlichen Aktor 25, welcher mit dem mittleren bzw. zweiten Abstützelement 12 verbunden ist. Dieser Aktor 25 ist ebenfalls schwenkbar am Boden 4 gelagert und wird passiv mitbewegt, wenn das korrespondierende Abstützelement 12 angehoben wird. Der Aktor 25 wird festgelegt oder verrastet, wenn das korrespondierende Abstützelement 12 seine Wirkposition aufweist und stützt dieses ab.

Durch die Verwendung von wesentlich mehr als drei Abstützelementen 11, 12, 13 kann der potentielle Abstand der Verse 6.2 zu einem in die Wirkposition aufgestellten Abstützelement 11, 12, 13 deutlich reduziert werden, da der potentielle Abstand durch die Breite der einzelnen Abstützelemente 11, 12, 13 bestimmt wird. Dadurch erhöht die Verwendung einer größeren Anzahl von schmäleren Abstützelementen 11, 12, 13 die Wirksamkeit der aktiven Fußabstützvorrichtung 10.

In einem nicht dargestellten Ausführungsbeispiel der erfindungsgemäße Fußabstützvorrichtung 10 kann mindestens ein Dämpfungselement, in der vorgegebenen Fahrsituation Kräfte dämpfen, welche von der Ferse 6.2 auf den Fersenauflaufpunkt übertragen werden. Das Dämpfungselement kann hierbei eine progressive oder degressive oder lineare Kennlinie aufweisen. Die Abstützelemente 11, 12, 13 können jeweils mindestens ein Dämpfungselement aufweisen. Beispielsweise kann ein Dämpfungselement den Fersenauflaufpunkt ausbilden oder im Bereich des Fersenauflaufpunkts angeordnet werden. Das Dämpfungselement kann an einer der Ferse 6.2 zugwandten Oberfläche oder unter der Oberfläche des korrespondierenden Abstützelements 11, 12, 13 angeordnet werden. Alternativ oder zusätzlich kann mindestens ein Dämpfungselement zwischen dem vom Antrieb 22 antreibbaren Aktor 24 und dem korrespondierenden Abstützelement 11 angeordnet werden. Zusätzlich oder alternativ kann mindestens ein Dämpfungselement zwischen dem zusätzlichen Aktor 25 und dem korrespondierenden Abstützelement 12 angeordnet werden.

### BEZUGSZEICHENLISTE

- 1: Fahrzeug
- 2: Fußraum
- 4: Boden
- 6: Fuß
- 6.2: Ferse
- 8: Pedal
- 10: Fußabstützvorrichtung
- 11: erstes Abstützelement
- 12: zweites Abstützelement
- 13: drittes Abstützelement
- 14, 15: Drehgelenk
- 20: Antriebsanordnung
- 22: Antrieb
- 24: Aktor
- 24A: Hebel
- 25: zusätzlicher Aktor
- 26: Sensorelement
- a: Aufstellwinkel
- b: Winkel zwischen erstem und zweitem Abstützelement
- c: Winkel zwischen zweitem und drittem Abstützelement

## Patentansprüche

1. Fußabstützvorrichtung (10) für einen Fußraum (2) eines Fahrzeugs (1), mit mehreren hintereinander angeordneten Abstützelementen (11, 12, 13), wobei die Abstützelemente (11, 12, 13) beim Erfassen einer vorgegebenen Fahrsituation von einer Ruheposition in eine Wirkposition überführbar sind, wobei die Abstützelemente (11, 12, 13) in der Ruheposition jeweils parallel zum Boden (4) des Fußraums (2) angeordnet sind und in der Wirkposition gegenüber dem Boden (4) jeweils einen Aufstellwinkel (a) aufweisen und mindestens einen Fuß (6) eines Insassen abstützen, wobei die Abstützelemente (11, 12, 13) drehbeweglich miteinander verbunden sind, wobei eine Antriebsanordnung (20) zumindest ein vorderstes Abstützelement (11) in seine Wirkposition anhebt, und wobei eine Bewegung eines angehobenen vorderen Abstützelements (11, 12) eine Bewegung eines nachfolgenden Abstützelements (12, 13) bewirkt,
**dadurch gekennzeichnet dass**
die Antriebsanordnung (20) einen Antrieb (22) und mindestens einen Aktor (24) aufweist, welcher zumindest mit dem vordersten Abstützelement (11) verbunden und durch den Antrieb (22) antreibbar ist.

2. Fußabstützvorrichtung (10) nach Anspruch 1,
**dadurch gekennzeichnet, dass**
benachbarte Abstützelemente (11, 12, 13) jeweils über ein Drehgelenk (14, 15) miteinander verbunden sind.

3. Fußabstützvorrichtung (10) nach Anspruch 1 oder 2,
**dadurch gekennzeichnet, dass**
eines der Abstützelemente (11, 12), welches in der vorgegebenen Fahrsituation direkt vor einer Ferse (6.2) des mindestens einen Fußes (6) angeordnet ist, in der Wirkposition einen Fersenauflaufpunkt ausbildet.

4. Fußabstützvorrichtung (10) nach einem der Ansprüche 1 bis 3,
**dadurch gekennzeichnet, dass**
ein Sensorelement (26) eine auf ein korrespondierendes Abstützelement (12, 13) wirkende Gewichtskraft der Ferse (6.2), welche gegen eine vom Antrieb (22) erzeugte Antriebskraft wirkt, durch Erfassen und Auswerten der erzeugten Antriebskraft erkennt und den Antrieb (22) nach Erkennung der Gewichtskraft deaktiviert.

5. Fußabstützvorrichtung (10) nach einem der Ansprüche 1 bis 4,
**dadurch gekennzeichnet, dass**
der mindestens eine Aktor (24) das mindestens eine korrespondierende Abstützelement (11, 12) in seiner Wirkposition festlegt.

6. Fußabstützvorrichtung (10) nach einem der Ansprüche 3 bis 5,
**dadurch gekennzeichnet, dass**
mindestens ein Dämpfungselement in der vorgegebenen Fahrsituation Kräfte dämpft, welche von der Ferse (6.2) auf den Fersenauflaufpunkt übertragen werden.

7. Fußabstützvorrichtung (10) nach Anspruch 6,
**dadurch gekennzeichnet, dass**
die Abstützelemente (11, 12, 13) jeweils mindestens ein Dämpfungselement aufweisen.

8. Fußabstützvorrichtung (10) nach Anspruch 6,
**dadurch gekennzeichnet, dass**
das mindestens eine Dämpfungselement zwischen dem mindestens einen Aktor (24) und dem korrespondierenden Abstützelement (11) angeordnet ist.

## Claims

1. Foot support device (10) for a footwell (2) of a vehicle (1), having several support elements (11, 12, 13) arranged behind one another, wherein the support elements (11, 12, 13) can be transferred from a rest position into an active position when a predetermined driving situation is detected, wherein in the rest position the support elements (11, 12, 13) are arranged respectively parallel to the floor (4) of the footwell (2) and in the active position have respectively a stand-up angle (a) with respect to the floor (4) and support at least 1 foot (6) of an occupant, wherein the support elements (11, 12, 13) are connected to one another so as to be rotationally movable, wherein a drive arrangement (20) lifts at least one front support element (11) into its active position, and wherein a movement of a raised front support element (11, 12) effects a movement of a subsequent support element (12, 13), **characterised in that** the drive arrangement (20) has a drive (22) and at least one actuator (24) which is connected at least to the front support element (11) and can be driven by the drive (22).

2. Foot support device (10) according to claim 1,
**characterised in that**
adjacent support elements (11, 12, 13) are connected to one another respectively by way of a swivel joint (14, 15).

3. Foot support device (10) according to claim 1 or 2,
**characterised in that**
one of the support elements (11, 12) which in the predetermined driving situation is arranged directly in front of a heel (6.2) of the at least one foot (6) forms in the active position a heel run-on point.

4. Foot support device (10) according to any of claims 1 to 3,
**characterised in that**
a sensor element (26) detects a weight force, acting on a corresponding support element (12, 13), of the heel (6.2), which acts against a drive force generated by the drive (22), by detecting and evaluating the generated drive force and deactivates the drive (22) after recognising the weight force.

5. Foot support device (10) according to any of claims 1 to 4,
**characterised in that**
the at least one actuator (24) fixes at least one corresponding support element (11, 12) in its active position.

6. Foot support device (10) according to any of claims 3 to 5,
**characterised in that**
in the predetermined driving situation, at least one damping element damps forces which are transmitted onto the heel run-on point from the heel (6.2).

7. Foot support device (10) according to claim 6,
**characterised in that**
the support elements (11, 12, 13) have respectively at least one damping element.

8. Foot support device (10) according to claim 6,
**characterised in that**
The at least one damping element is arranged between the at least one actuator (24) and the corresponding support element (11).

## Revendications

1. Dispositif de repose-pieds (10) pour un plancher (2) d'un véhicule (1), avec plusieurs éléments d'appui (11, 12, 13) disposés les uns derrière les autres, dans lequel les éléments d'appui (11, 12, 13) se peuvent être transférés d'une position de repos à une position active lorsqu'une situation de conduite prédéterminée est détectée, dans lequel les éléments d'appui (11, 12, 13) sont disposés respectivement parallèlement au sol (4) du plancher (2) dans la position de repos et présentent respectivement un angle de positionnement (a) par rapport au sol (4) et supportent au moins un pied d'un occupant (6) dans la position active, dans lequel les éléments d'appui (11, 12, 13) sont connectés les uns aux autres de manière mobile en rotation, dans lequel un agencement d'entraînement (20) lève au moins un élément d'appui le plus avant (11) dans sa position active, et dans lequel un mouvement d'un élément d'appui avant relevé (11, 12) provoque un mouvement d'un élément d'appui suivant (12, 13), **caractérisé en ce que** l'agencement d'entraînement (20) présente un entraînement (22) et au moins un actionneur (24) qui est connecté au moins à l'élément d'appui le plus avant (11) et peut être entraîné par l'entraînement (22).

2. Dispositif de repose-pieds (10) selon la revendication 1,
**caractérisé en ce que**
des éléments d'appui adjacents (11, 12, 13) sont respectivement connectés entre eux par un pivot (14, 15).

3. Dispositif de repose-pieds (10) selon la revendication 1 ou 2,
**caractérisé en ce que**
un des éléments d'appui (11, 12), lequel est disposé directement devant un talon (6.2) de l'au moins un pied (6) dans la situation de conduite prédéterminée, forme un point de contact du talon dans la position active.

4. Dispositif de repose-pieds (10) selon l'une quelconque des revendications 1 à 3,
**caractérisé en ce que**
un élément capteur (26) détecte une force de poids du talon (6.2), agissant sur un élément d'appui correspondant (12, 13), qui agit contre une force d'entraînement générée par l'entraînement (22), en détectant et en évaluant la force d'entraînement générée et désactive l'entraînement (22) après la détection de la force de poids.

5. Dispositif de repose-pieds (10) selon l'une quelconque des revendications 1 à 4,
**caractérisé en ce que**
l'au moins un actionneur (24) fixe l'au moins un élément d'appui correspondant (11, 12) dans sa position active.

6. Dispositif de repose-pieds (10) selon l'une quelconque des revendications 3 à 5,
**caractérisé en ce que**
au moins un élément d'amortissement dans la situation de conduite prédéterminée amortit des forces qui sont transmises du talon (6.2) au point de contact du talon.

7. Dispositif de repose-pieds (10) selon la revendication 6,
**caractérisé en ce que**
les éléments d'appui (11, 12, 13) présentent respectivement au moins un élément d'amortissement.

8. Dispositif de repose-pieds (10) selon la revendication 6,
**caractérisé en ce que**
l'au moins un élément d'amortissement est disposé entre l'au moins un actionneur (24) et l'élément d'appui correspondant (11).
